# EUROPEAN PATENT SPECIFICATION

(11) **EP 1 408 761 B1**
(45) Date of publication and mention of the grant of the patent: **23.11.2005**
(21) Application number: 02741581.9
(22) Date of filing: 19.06.2002
(51) Int. Cl.: A01N 63/00, C07K 7/16

(54) **USE OF OXYTOCIN IN ORDER TO STIMULATE PLANT GROWTH**
VERWENDUNG VON OXYTOCIN ZUR STIMULIERUNG DES PFLANZENWACHSTUMS
UTILISATION D' OCYTOCIN AFIN DE STIMULER LA CROISSANCE VEGETALE

(30) Priority: 19.06.2001 SE 0102185
(43) Date of publication of application: 21.04.2004
(73) Proprietor: Uvnäs-Moberg, Kerstin, 182 62 Djursholm (SE); Lundegaardh, Bengt, 756 55 Uppsala (SE)
(72) Inventor: Uvnäs-Moberg, Kerstin, 182 62 Djursholm (SE); Lundegaardh, Bengt, 756 55 Uppsala (SE)
(74) Representative: Fagerlin, Heléne
(86) International application number: PCT/SE2002/001208
(87) International publication number: WO 2002/102160

(56) References cited:
- WO-A1-00/18424
- GASPAR THOMAS ET AL.: 'Plant hormones and plant growth regulators in plant tissue culture' IN CITRO CELL. DEV. BIOL. vol. 32, October 1996 - December 1996, pages 272 - 289, XP002956286

## Description

The present invention relates to the use of oxytocin in order to stimulate plant growth. It also relates to the use of a composition comprising such a compound.

### Background of the invention

In most cases, the preliminary stage to a plant is a seed. The seed is a resting structure. The process of germination is the absorption of water by the seed, the reactivation of metabolism and the initiation of growth. The seed contains an embryo; one end of this embryo, the radicle will form the root of the plant; the other end, the plumule, will form the stem and leaves. The embryo also has cotyledons or seed leaves (one in monocots, two in dicots, and many in gymnosperms) which may be small and occupy only a small part of the seed, as in monocots, or may be large enough almost completely to fill the seed, as in beans and many other dicots.

In the germination of a monocot seedling, the radicle grows downward through the split seed coat to produce the primary root, and the shoot, encased in its protective sheath, the coleoptile, grows upward. The species *Agrostis tenuis, Triticum sativum* and *Lactuca sativa* are all monocots. For dicots, however, the plumule is not protected by a coleoptile. Instead, the plumule pushes through the soil in a "crook" form, called the plumule hook. In this way, the delicate newly forming leaves of the plumule are not damaged.

Generally, it is highly desirable to stimulate plant growth but not to stimulate weed growth. Accordingly, there has been a long-felt need to find a cheap agent that effectively stimulates plant growth but does not stimulate weed growth. Plant hormones are known to stimulate plant growth. Examples of plant hormones are auxins, gibberelins, cytokinins and abscisic acid. A problem with these agents is that they are relatively expensive and they may be toxic in high concentrations. Alternatively, herbicides such as phenoxy acids may be used in order to inhibit weed growth. A problem with herbicides is above all the high toxicity thereof. As a result, many herbicides have been prohibited by law.

The above-mentioned problems have been solved by using oxytocin as a stimulating agent for plant growth. Oxytocin is a cheap agent that is produced in the human body. Oxytocin has shown to be a more potent stimulating agent for plant growth than the plant hormones mentioned above. The mechanism of action of oxytocin is probably by improving the nutrient uptake, transport and release via roots in combination with a better photosynthesis or translocation i e redistribution of inorganic and organic compounds between tissues and inclusion in seeds or other storage organs. In seeds, oxytocin stimulates germination but above all most likely the turnover and translocation of organic material from the nucleus to root and shoot embryos. Oxytocin may be used in order to break dormancy, stimulate germination and the growth of the germ. By a faster early growth, the plant will compete better with weed. In later stages, oxytocin may influence initiation of flower primodium and increase the survival rate of florets and seeds by better inclusion of organic matter and an increased translocation of nutrient and compounds to the seeds. This may lead to more even or bigger harvests with the same quality. Oxytocin can also effect next generations causing more rapid germination and enhanced growth by influence of genomes or seed composition.

New plants could also be developed by vegetative propagation for example from bulbs, tubers, meristimatic tissues such as buds, apical meristems, cell cultures and cuttings. Cuttings can be used for grafting or planting. Unicellular algae are propagated by cell division.

The action of oxytocin can also be used by stimulation of cell division and in such a way enhanced growth of plants, including unicellular algae, propagated by processes mentioned above.

It should be noted that the term "plant" within the context of the present invention includes all groups of plants as is recognized by a person skilled in the art. Such groups of plants include e g gymnosperms, angiosperms, monocotyledons (monocots), dicotyledons (dicots) and algae.

There are different processes described for the synthetical production of oxytocin; commercial processes are for instance described in US patents 2,938,891 and 3,076,797.

Oxytocin was one of the first peptide hormones to be isolated and sequenced. It is a nonapeptide with two cysteine residues that form a disulfide bridge between positions 1. and 6 and corresponds to the formula

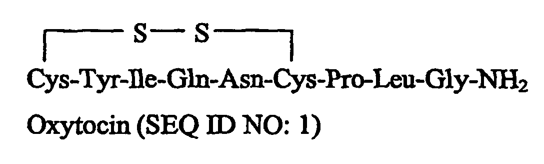

There are several oxytocin derivatives, i.e. compounds with a structure similar to that of oxytocin. The inventors have preliminary indications that other oxytocin derivatives than oxytocin may stimulate plant growth, as well as parts of the oxytocin molecule. Such oxytocin derivatives and parts of the oxytocin molecule with the same or similar effects on plant growth as oxytocin are generally called substances with oxytocin activity. Substances with oxytocin activity also include precursors, metabolic derivatives, oxytocin agonists and analogues displaying the same properties.

WO 00/18424 discloses the use of substances with oxytocin activity for the preparation of a pharmaceutical composition in order to improve cell regeneration. By cell regeneration is meant the recovery of a human or animal body by a controlled and helpful generation of existing and new cells as well as cell maturation in order to replace damaged cells. WO 00/18425 discloses the use of the same substances in order to promote growth of human and animal cells. However, none of these documents describe the generation and growth of plant cells. Accordingly, it is not previously known from these documents that oxytocin and oxytocin derivatives or parts of the oxytocin molecule may stimulate plant growth.

The stimulating effect of oxytocin on plant growth is shown in the Examples. In Example 1, it was shown that oxytocin increased the amount of germinated seeds and stimulated the growth of seeds for the species winter wheat (*Triticum sativum*) and bent (*Agrostis tenuis*). In Example 2, it was shown that oxytocin increased the growth of lettuce (*Lactuca sativa*).

### Summary of the invention

The present invention relates to the use of oxytocin in order to stimulate plant growth. It also relates to the use of a composition comprising oxytocin in order to stimulate plant growth.

### Detailed description of the invention

One object of the present invention is the use of oxytocin activity in order to stimulate plant growth.

Another object of the invention is a composition comprising oxytocin in order to stimulate plant growth, in mixture or otherwise together with at least one suitable adjuvant.

General principals in administration of growth stimulating agents are to have the substances mentioned above in mixture or otherwise together with adjuvants such as water or organic solvents such as alcohol or coating agents such as gels, which may delay the delivery of a substance with oxytocin activity. Drying such agents will delay the delivery of oxytocin until water is absorbed by the coating agents. All these agents can be used as a solvent for the substance or substances with oxytocin activity. The substance is taken up by the plant via the root or the leaf and may be formulated in order to make it more or less water-soluble. The water solubility may be regulated by binding the substance to a carrier. A carrier is an organic group making the substance more or less hydrophilic. An example of a carrier malting the substance more hydrophilic is an amide group. An example of a carrier making the substance less hydrophilic is a methyl group. When the substance bound to a carrier has been assimilated to the plant, the carrier will be removed enzymatically by using a naturally occurring enzyme of the plant. Substances with oxytocin activity can be used in many ways as a stimulator of dormancy breaking, germination and growth. One example would be to speed up germination and early growth of wheat by application of a substance with oxytocin activity to wheat seeds before sowing. In this way, wheat would overcome competition by weeds. A substance with oxytocin activity can be applied to plants at one developing stage or several different stages depending on which effect of a substance with oxytocin activity that is desired.

As used in the present application:
the term "fresh weight" (abbreviated fw) means the weight of the plant before drying;
the term "dry weight" (abbreviated dw) means the weight of the plant after drying;
the term "dry matter" (abbreviated dm) means the plant materia obtained after drying. When the dry matter is expressed in %, this means the ratio between the dry weight and the fresh weight for a specific part of the plant.

All publications mentioned herein are hereby incorporated by reference. By the expression "comprising" we understand including but not limited to. Thus, other non-mentioned substances or additives may be present

The invention will be illuminated by the following Examples, which are only intended to illuminate and not restrict the invention in any way.

### Examples

### Statistics

Statistical analysis was performed by means of 2-way ANOVA followed by Bonferroni's test for post hoc comparison. Results are given as mean values. Differences in the number of germinated seeds, coleoptile length, root length (Example 1) and growth of lettuce (Example 2) were assessed by Student's t-test for independent means. Results were considered significant when p<0.05.

### Example 1 - Germination test

### Materials and methods

In each of 10 Petri dishes with a diameter of 10 cm, 100 seeds of bent (*Agrostis tenuis*) are placed together with two filter papers. To five of the Petri dishes is added 4,5 ml of a 1 µg/ml aqueous solution of oxytocin. To the other five Petri dishes is added the same amount of tap water. All ten Petri dishes are then placed in darkness for germination during fourteen days at a temperature of 18°C.

In each of 10 Petri dishes with a diameter of 10 cm, 100 seeds of winter wheat (*Triticum sativum*) are placed together with two filter papers. To five of the Petri dishes is added 4,5 ml of a 1 µg/ml aqueous solution of oxytocin. To the other five Petri dishes is added the same amount of tap water. All ten Petri dishes are placed in darkness for germination during fourteen days at a temperature of 18°C.

### Results

Germination of seeds of winter wheat (*Triticum sativum*) and bent (*Agrostis tenuis*) was affected by oxytocin (Table 1). The treatment denoted "Untreated" refers to treatment with tap water only. As is seen from the Table, oxytocin increased the number of germinated seeds and stimulated the growth of seeds of winter wheat. The results were similar for seeds of *Agrostis tenuis.* However, only the increase in root length was significant in the latter species.

**Table 1.**

| Mean number of germinated seeds, coleoptile length and root length of *Triticum sativum* and *Agrostis tenuis* after treatment of the seeds with or without oxytocin. | | | | |
|---|---|---|---|---|
| Species | Treatment | Germinated seeds | Coleoptile length [mm] | Root length [mm] |
| *Triticum sativum* | | | | |
| | Untreated | 89.3 | 0.0 | 2.2 |
| | Oxytocin | 97.0 | 27.4 | 36.0 |
| | P-value | 0.005 | <0.001 | <0.001 |
| *Agrostis tenuis* | | | | |
| | Untreated | 5.4 | 37.2 | 12.0 |
| | Oxytocin | 9.8 | 39.1 | 15.7 |
| | P-value | 0.156 | 0.524 | 0.025 |

### Example 2 - Growth test

### Materials and methods

### Germination

The plant used was lettuce (*Lactuca sativa*), sort "Calgary" and non-disinfected ecological seeds were used. In the same manner as in Example 1,150 seeds are germinated in oxytocin solution and 150 seeds are germinated in tap water, in both cases in darkness.

### Growth phase

After germination for six days, the germs are put into 1 litre test vessels with four germs per vessel. To ten vessels are added oxytocin treated germs and to ten other vessels are added germs treated with tap water, giving totally eighty plants. Each vessel contains 1 litre 300 µM calcium sulphate solution. Other nutrients were added on the first and third day and from day five until harvest, 21 days after transferring germs to vessels. Increasing volumes from a stock nutrient solution (24 mM potassium, 2.5 mM magnesium, 22.3 mM ammonium, 4 mM phosphorus, 46.9 mM nitrate, 1 mM chlorine and trace elements) were supplied to meet the immediate nutrient demand of plants with a relative growth rate of 20% day⁻¹. Three days after the transport of the germs to the vessels, 1 mg of oxytocin was added to half of the oxytocin treated germs and to half of the germs treated with tap water giving a oxytocin concentration of 1 µg/ml. The growth phase experiment was performed in a climate chamber with 14 hours illumination per day at a temperature of 18°C at light and at a temperature of 14°C in darkness.

Accordingly, the eighty plants have been treated as follows:
20 plants (5 vessels each having 4 plants) - treated with tap water during germination and growth (denoted - ox / - ox);
20 plants (5 vessels each having 4 plants) - treated with oxytocin solution during germination and with tap water during growth (denoted + ox / - ox);
20 plants (5 vessels each having 4 plants) - treated with tap water during germination and with oxytocin solution during growth (denoted - ox / + ox);
20 plants (5 vessels each having 4 plants) - treated with oxytocin solution during germination and growth (denoted + ox / + ox).

### Results after the growth phase

Lettuce treated with oxytocin at germination (+ ox / - ox) or during the growth in nutrient solution (- ox / + ox) showed a significant increase in growth compared with control (- ox / - ox) (Table 2). In particular, the root growth is stimulated by oxytocin. The content of dry matter was also increased by these treatments. Treatment of lettuce during both germination and growth in nutrient solution (+ ox / + ox) gave no effects compared with control. The root length was even inhibited when oxytocin was available during the whole experiment period. The same was found for the content of dry matter. The results show that oxytocin stimulates growth rate, especially the root growth, and increases the accumulation of organic matter in plant tissues, whereas the water content decreases. The results show that different effects may be induced depending on when and how many times oxytocin is applied.

**Table 2.**

| | | | | | |
|---|---|---|---|---|---|
| Growth of lettuce, *Lactuca sativa,* treated with or without oxytocin. Treatment during germination/treatment during growth, - ox = without oxytocin, + ox = with oxytocin. Numbers following of the same letter are not significant at the 5% level. This means that "a" and "b" for two values differ significantly from each other at the 5% level but not with "a" and "a" or "a" and "ab". The P-value refers to the ANOVA value for the model. | | | | | |

| | - ox / -ox | + ox/- ox | - ox / + ox | + ox / + ox | P-value |
|---|---|---|---|---|---|
| Whole plant, fw, g | 6.33b | 6.59a | 6.51ab | 6.41ab | 0.0530 |
| Whole plant, dw, g | 0.730b | 0.782a | 0.797a | 0.721b | 0.0153 |
| Shoot, fw, g | 4.436a | 4.559a | 4.508a | 4.466a | 0.3204 |
| Shoot, dw, g | 0.603b | 0.641ab | 0.656a | 0.596b | 0.0427 |
| Shoot, dm, % | 13.60b | 14.06ab | 14.55a | 13.34b | 0.0448 |
| Root, fw, g | 1.89b | 2.03a | 2.00a | 1.94ab | 0.0279 |
| Root, dw, g | 0.126b | 0.141a | 0.141a | 0.126b | 0.0039 |
| Root, dm, % | 6.70ab | 7.03a | 6.92ab | 6.44b | 0.1329 |
| Root length, cm | 23.4a | 24.4a | 23.6a | 21.00b | 0.0053 |
| Shoot/root, fw | 2.35a | 2.24a | 2.25a | 2.30a | 0.1998 |
| Shoot/root, dw | 4.80a | 4.59a | 4.67a | 4.76a | 0.6165 |

## Claims

1. Use of oxytocin in order to stimulate plant growth.

2. Use according to claim 1, **characterised in that** the oxytocin is bound to a carrier.

3. Use of a composition comprising oxytocin in order to stimulate plant growth.

4. Use according to claim 3, **characterised in that** the oxytocin is bound to a carrier.

5. Use according to any of claims 3-4 **characterised in that** the composition also comprises at least one suitable adjuvant.

## Patentansprüche

1. Verwendung von Oxytocin zur Stimulation von Pflanzenwachstum.

2. Verwendung nach Anspruch 1, **dadurch gekennzeichnet, dass** das Oxytocin an einen Träger gebunden ist.

3. Verwendung einer Zusammensetzung, welche Oxytocin umfasst, zur Stimulation von Pflanzenwachstum.

4. Verwendung nach Anspruch 3, **dadurch gekennzeichnet, dass** das Oxytocin an einen Träger gebunden ist.

5. Verwendung nach irgendeinem der Ansprüche 3-4, **dadurch gekennzeichnet, dass** die Zusammensetzung ferner wenigstens einen geeigneten Hilfsstoff umfasst.

## Revendications

1. Utilisation d'oxytocine dans le but de stimuler la croissance des plantes.

2. Utilisation selon la revendication 1, **caractérisée en ce que** l'oxytocine est liée à un support.

3. Utilisation d'une composition comprenant de l'oxytocine dans le but de stimuler la croissance des plantes.

4. Utilisation selon la revendication 3, **caractérisée en ce que** l'oxytocine est liée à un support.

5. Utilisation selon l'une quelconque des revendications 3-4, **caractérisée en ce que** la composition comprend également au moins un adjuvant approprié.
